# FASCICULE DE BREVET EUROPEEN

(11) **EP 2 915 696 B1**
(45) Date de publication et mention de la délivrance du brevet: **14.12.2016**
(21) Numéro de dépôt: 15154352.7
(22) Date de dépôt: 09.02.2015
(51) Int. Cl.: B60P 7/08, B60R 7/02

(54) **Enrouleur de sangle universel et amovible pour véhicule**
Entfernbarer Universalgurtaufroller für Fahrzeug
Removable universal strap winder for vehicle

(30) Priorité: 10.02.2014 BE 201400090
(43) Date de publication de la demande: 09.09.2015
(73) Titulaire: ROLIX S.p.r.l., 5310 Waret la Chaussée (Eghezee) (BE)
(72) Inventeur: Burnick, Frank, 5310 WARET-LA-CHAUSSEE (BE)
(74) Mandataire: Pronovem

(56) Documents cités:
- DE-U1-202010 006 966
- US-A- 5 993 127
- US-A1- 2004 173 707

## Description

### Objet de l'invention

La présente invention concerne un dispositif pour la fixation d'objets à des structures de châssis, et se rapporte plus particulièrement à un dispositif d'arrimage d'objets placés à l'extérieur d'un véhicule durant leur transport.

Plus précisément, la présente invention concerne un dispositif d'arrimage amovible et adaptable en fonction des dimensions du support auquel il est fixé, tel que montré dans US 2004/0173707 A1.

### Etat de la technique

Il est souvent souhaitable d'attacher un objet sur un véhicule. Il existe à cet effet la galerie de toit qui est une structure, le plus souvent métallique, composée d'un entrecroisement de barres fixées au véhicule, et formant un plateau de chargement sur lequel les charges sont attachées, par exemple, à l'aide de tendeurs, sangles ou sandows.

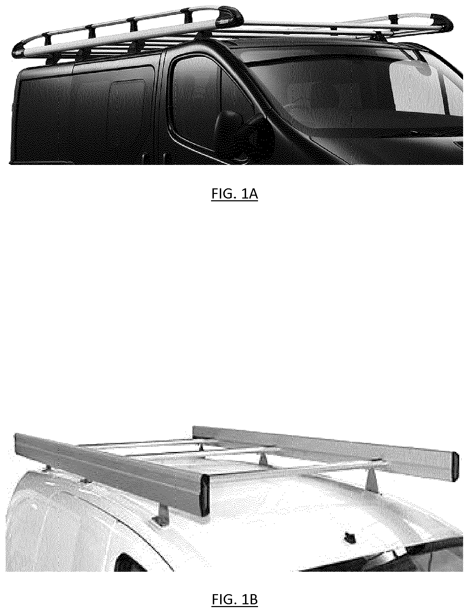

On distingue principalement deux types de galeries de toit selon la forme des barres longitudinales employées: la barre longitudinale est constituée de deux barres reliées par des tubes transversaux (voir figure 1A) ou est constituée d'une seule pièce plus large ne comportant pas de tubes transversaux (voir figure 1B).

Les dimensions et formes de ces barres longitudinales peuvent varier en fonction de la conception et/ou du fabricant de la galerie de toit. Par exemple, les barres longitudinales peuvent avoir une section ronde, carrée, rectangulaire ou ovale.

En raison de la variété de configurations des montants de galeries de toit qui peuvent être rencontrées, des dispositifs d'arrimage différents sont requis pour attacher solidement l'objet à transporter pour chaque barre de forme particulière.

Pour éviter l'utilisation de dispositifs différents selon la forme des barres de toit, le brevet US 6,322,279 propose un dispositif de fixation qui est réglable. Ce dispositif permet d'attacher des accessoires, tels qu'un vélo, des skis, ou une galerie de transport, sur un cadre, tel que la galerie de toit d'une voiture. Il comporte une partie supérieure avec une encoche pour accueillir l'accessoire et une partie inférieure munie d'une sangle permettant de fixer le dispositif à la barre de toit. Ce dispositif est ajustable pour des barres de toit de forme circulaire, ovale et rectangulaire grâce à une cavité se trouvant dans la partie inférieure du dispositif. Cet ajustement est cependant limité aux dimensions et formes de la cavité qui peut accueillir des barres rectangulaires ou rondes grâce à des renfoncements de dimension fixe. Ce dispositif présente en outre pour désavantage qu'il ne permet pas la fixation de tout type de charge mais uniquement d'accessoires pouvant se glisser dans la portion rainurée.

Le brevet US 4,900,203 propose un système d'arrimage de charges sur un véhicule de type pick-up, qui, lui, peut s'accommoder de toutes formes et dimensions des montants du cadre servant de support à la charge. Le système comporte une sangle pour ceinturer la charge et est fixé aux montants à l'aide de boulons. Les principaux désavantages de ce système sont que sa fixation nécessite de forer dans le montant, c'est-à-dire en d'autres mots, d'endommager le support, et qu'une fois mis en place, il n'est plus possible de le déplacer.

### Buts de l'invention

L'invention a pour but de proposer un dispositif d'arrimage de charges sur un véhicule qui soit adaptable à différentes dimensions du support.

L'invention a aussi pour but de proposer un dispositif d'arrimage de charges qui puisse être fixé sur le support sans l'endommager.

L'invention a également pour objectif de proposer un dispositif d'arrimage de charges qui permette la fixation de tout type de charges.

Finalement, l'invention a pour objectif de fournir un dispositif d'arrimage de charges qui, selon la taille de l'objet à transporter, puisse être positionné au meilleur endroit lors de l'utilisation.

### Principaux éléments caractéristiques de l'invention

La présente invention concerne un dispositif d'arrimage d'une charge sur un véhicule, ledit dispositif comprenant :
- un enrouleur de sangle dont la sangle est destinée à maintenir la charge,
- une mâchoire réglable solidaire de l'enrouleur et destinée à se fixer à un support sur le véhicule, ladite mâchoire comprenant un premier élément et un second élément coopérant l'un par rapport à l'autre de manière à pouvoir faire varier, en utilisation, l'ouverture de la mâchoire en fonction d'une dimension du support.

Selon des modes d'exécution préférés, l'invention comporte une ou une combinaison appropriée des caractéristiques suivantes :
- la fixation du dispositif d'arrimage au support est, en utilisation, assurée par le seul réglage de l'ouverture de la mâchoire ;
- le dispositif comporte un élément fileté accouplé au premier élément, la mise en rotation de l'élément fileté entrainant, en utilisation, le déplacement du premier élément ;
- le dispositif comporte un boulon fileté accouplé au premier élément, la mise en rotation du boulon fileté entrainant, en utilisation, le déplacement du premier élément ;
- le premier élément se présente sous la forme d'un profilé en S comprenant une partie centrale verticale terminée par deux ailes d'orientation opposée. De préférence, une des ailes comporte un trou taraudé apte à accueillir le boulon fileté ;
- le dispositif comporte un palier haut et un palier bas délimitant la course du premier élément, lesdits paliers étant munis d'un trou non taraudé dans lequel le boulon fileté peut coulisser. Dans ce dispositif, l'enrouleur de sangle comporte de préférence une première et une seconde rainures accueillant respectivement le palier haut et le palier bas ;
- le dispositif est destiné à se fixer au support qui est un montant d'une galerie de toit de camionnette, un montant d'un porte-bagages de voitures ou des treillis de protection utilisés sur les véhicules utilitaires et les remorques ;
- une extrémité de la sangle est solidaire de l'enrouleur et l'autre extrémité est munie d'un crochet pouvant s'arrimer au support ou à l'enrouleur de sangle ;
- le palier haut comporte une troisième rainure dans laquelle le premier élément peut coulisser ;
- l'ouverture a une valeur minimale de 50 mm, de préférence 90 mm ;
- le dispositif est adaptable à un support de section ronde, ovale, carrée ou rectangulaire ;
- le premier élément comporte un point d'appui destiné à entrer en contact avec le support et dans lequel le second élément comporte deux points d'appui destinés à entrer en contact avec le support ;
- le premier élément et le second élément de la mâchoire comportent un joint déformable ;
- le dispositif comporte une molette solidaire du boulon fileté, la mise en rotation de la molette permettant de déplacer le premier élément ;
- le support est vertical et l'ouverture de la mâchoire est réglable en utilisation en fonction de la hauteur dudit support.

### Brève description des figures

La figure 1A est une vue en perspective d'une galerie de toit dont les barres longitudinales sont constituées de deux barres reliées entre elles par des tubes. La figure 1B est quant à elle une vue en perspective d'un autre modèle de galerie de toit dont les barres longitudinales sont constituées d'une seule pièce plus large et ne comportant pas de tubes.

La figure 2A est une vue de profil du dispositif d'arrimage selon l'invention dans lequel la mâchoire réglable est en extension minimum. La figure 2B est quant à elle une vue de profil du même dispositif d'arrimage dans lequel la mâchoire réglable est en extension maximum.

La figure 3A se rapporte à une vue du dessus du dispositif d'arrimage. La figure 3B représente une vue en coupe selon la section A-A de la figure 3A.

La figure 4 est une vue de face du dispositif d'arrimage.

La figure 5 se rapporte à une vue de profil du dispositif d'arrimage.

La figure 6 est une vue éclatée, en perspective, des différentes pièces constitutives du dispositif d'arrimage selon l'invention.

La figure 7 illustre les détails du mini-treuil (la mâchoire réglable n'est pas représentée).

La figure 8 est une vue de profil du dispositif de l'invention avec en traits discontinus le mécanisme intérieur. Le dispositif est fixé à une galerie de toit comprenant deux barres de section circulaire alors que la figure 9 illustre la fixation à une galerie de toit comprenant une large barre de section rectangulaire.

La figure 10 se rapporte à une vue en perspective du dispositif de l'invention présenté à la figure 8 et arrimé à une galerie de toit comprenant deux barres de section circulaire.

La figure 11 se rapporte à une vue en perspective du dispositif de l'invention arrimé au treillis de protection d'une cabine de pick-up.

### Description détaillée de l'invention

L'invention se rapporte à un dispositif d'arrimage d'une charge sur un véhicule. Le terme générique charge désigne tout objet de forme et poids quelconques. Les véhicules peuvent être des véhicules automobiles, par exemple des camionnettes, camions, ou voitures de tourisme et breaks. Les véhicules peuvent aussi être des véhicules sans moteur, comme des remorques.

Le dispositif d'arrimage selon l'invention est destiné à être fixé à un support situé sur le véhicule. De préférence, le support est un montant d'une galerie de toit de camionnette, d'un montant d'un porte-bagages de voiture ou les treillis de protection utilisés sur les véhicules utilitaires comme les pick-up ou les remorques. Le support est préférentiellement vertical et de dimension, et plus précisément, de hauteur suffisante que pour permettre la fixation du dispositif d'arrimage. Ainsi, comme décrit ci-dessous, ledit dispositif est adaptable à différentes dimensions de support comprenant deux points d'appui espacés verticalement d'au moins 50 mm. Cela exclut les montants de petite section comme, par exemple, ceux des véhicules automobiles récents comportant deux barres longitudinales d'épaisseur inférieure à 20 mm. La présence de deux points d'appui séparés par un espace minimum permet une fixation stable du dispositif au montant et évite ainsi son basculement. Si on se réfère à la figure 1A, les deux points d'appui sont par exemple les deux barres parallèles constituant la barre longitudinale de la galerie de toit. Par contre, si on se réfère à la figure 1B, les deux points d'appui sont les côtés opposés de la barre longitudinale unique.

Un tel dispositif d'arrimage a pour fonction de maintenir les objets sur le support pendant le transport et d'éviter aussi bien leur perte que leur dégradation suite à des mouvements incontrôlés de ces objets par rapport au support.

Selon l'invention, le dispositif d'arrimage est amovible, c'est-à-dire qu'il peut être aisément démonté du support entre chaque utilisation, par opposition à des dispositifs boulonnés ou intégrés au support.

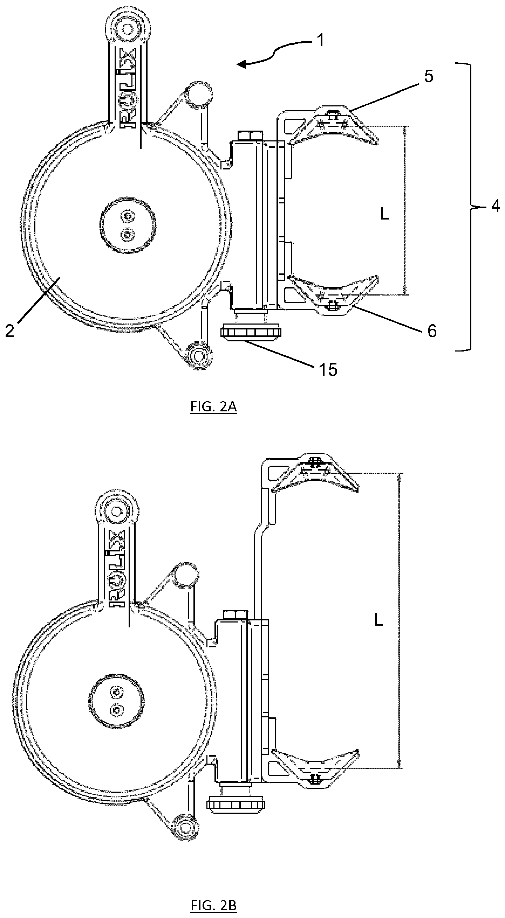

Le dispositif d'arrimage 1 tel que présenté à la figure 2A et 2B comporte un mini-treuil 2, aussi appelé enrouleur de sangle, ainsi qu'une mâchoire réglable 4 qui lui est solidaire. La mâchoire réglable 4 comprend un premier élément 5 et un second élément 6 dont l'ensemble constitue une pince permettant de fixer le dispositif de l'invention au support. De préférence, le premier élément 5 est monté mobile et le second élément 6 est fixe.

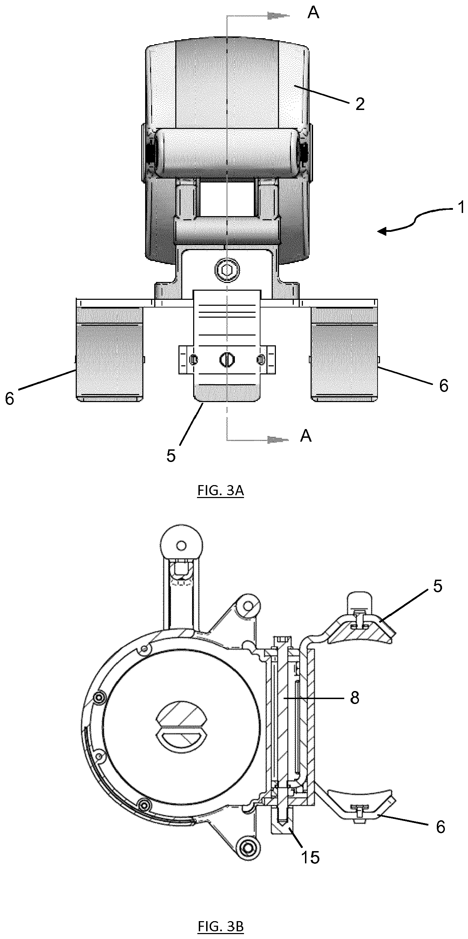

Le premier élément de la mâchoire 5 peut coulisser verticalement afin d'adapter la largeur L de la mâchoire à la dimension du support auquel elle est fixée. En tournant la molette 15 d'en bas, on fait monter (ou descendre) le premier élément de la mâchoire 5 grâce à un élément fileté 8, type tige filetée munie d'une tête ou boulon, accouplé à cet élément 5 (voir figures 2A, 2B, 3B et 6).

La figures 2A et la figure 2B sont des vues de profil du dispositif d'arrimage 1 où la mâchoire réglable 4 est en extension minimum (figure 2A) ou en extension maximum (figure 2B). A titre d'exemple, en extension minimum, la distance entre les deux points d'appui est de 50 mm, et de préférence de 90 mm, alors qu'elle est de 200 mm en extension maximum, l'ouverture minimum des mâchoires étant limitée par les dimensions minimum du boitier de l'enrouleur de sangle. L'ouverture maximale est quant à elle limitée par les dimensions du second élément de la mâchoire.

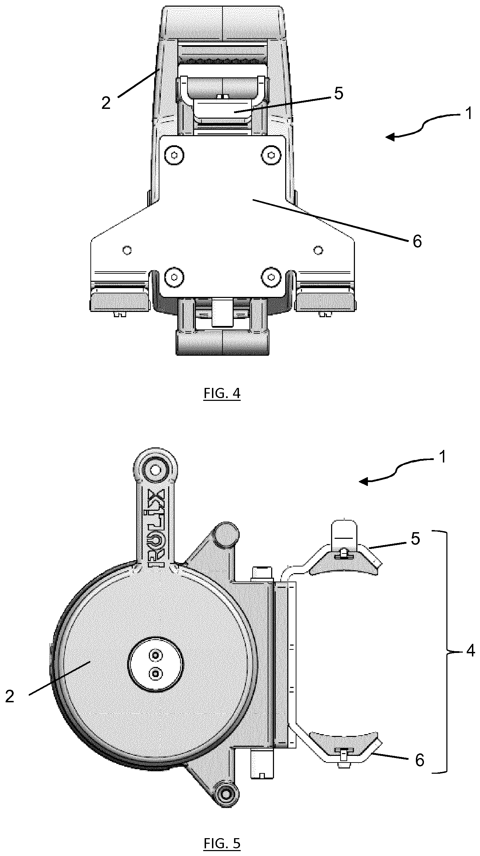

Comme illustré à la figure 4, le second élément de la mâchoire 6 est vissé au boîtier du mini-treuil 2 et le premier élément de la mâchoire 5 est inséré entre le boîtier et le second élément 6.

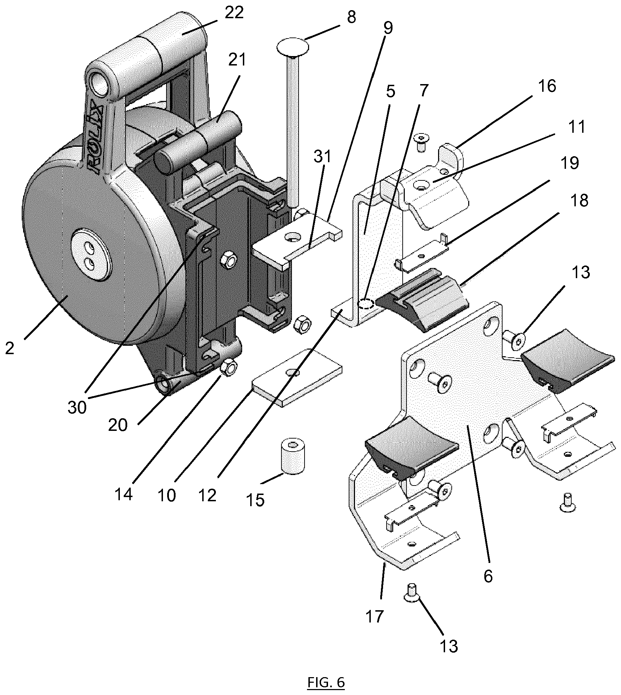

La figure 6 montre les détails des pièces de montage du dispositif d'arrimage 1. Le premier élément 5 de la mâchoire s'insère dans un espace délimité par un palier haut 9 et un palier bas 10. Les paliers 9,10 délimitent ainsi la course de l'élément mobile 5 et sont solidarisés au boîtier du mini-treuil 2 grâce à leur insertion dans des rainures 30 du boîtier.

L'élément mobile 5 se présente sous la forme d'un profilé en S comprenant une partie centrale verticale terminée par deux ailes d'orientation opposée 11, 12, l'aile inférieure 12 venant buter contre le palier haut 9 lorsque la mâchoire est en extension maximale alors qu'en extension minimale, elle bute contre le palier bas 10.

Le palier haut 9 est pourvu d'une rainure 31 dans laquelle la partie verticale de l'élément mobile 5 peut coulisser.

L'aile supérieure 11 est fixée au moyen d'une attache 19 à un joint déformable 18 en matière souple, par exemple, de type caoutchouc. Ce joint permet une adaptation de l'élément 5 à la dimension exacte du support qui est pressé contre lui. Il en est de même pour le second élément de la mâchoire 6 qui comporte des joints déformables 18 attachés aux sabots de support 17. De préférence, le premier élément 5 de la mâchoire comporte une seule surface de contact destinée à maintenir le support alors que le second élément 6 de la mâchoire comporte deux surfaces de contact distinctes afin d'assurer un maintien stable grâce au système triangulé.

L'aile supérieure 11 comporte de préférence des ailettes 16 aptes à guider la sangle lors de l'arrimage de l'objet à transporter.

L'élément 5 mobile est accouplé par filetage à un boulon 8. En particulier, l'élément 5 est pourvu dans l'aile inférieure 12 d'un trou taraudé 7 dans lequel se visse ou se dévisse le boulon 8. La rotation du boulon via la molette 15 entraine le déplacement vertical de l'élément 5, permettant ainsi d'ajuster sa hauteur à la dimension du support auquel il doit être fixé.

Les paliers 9, 10 ont un trou non taraudé et de diamètre supérieur au diamètre du corps du boulon 8 de sorte qu'en tournant la molette 15, on fait monter (ou descendre) l'élément mobile 5 de la mâchoire puisqu'il se visse (ou se dévisse) via le boulon 8.

Le corps du boulon 8 se positionne donc dans trois trous alignés, ceux des paliers (9,10) non taraudés et celui taraudé de l'aile inférieure de l'élément mobile 5 de la mâchoire.

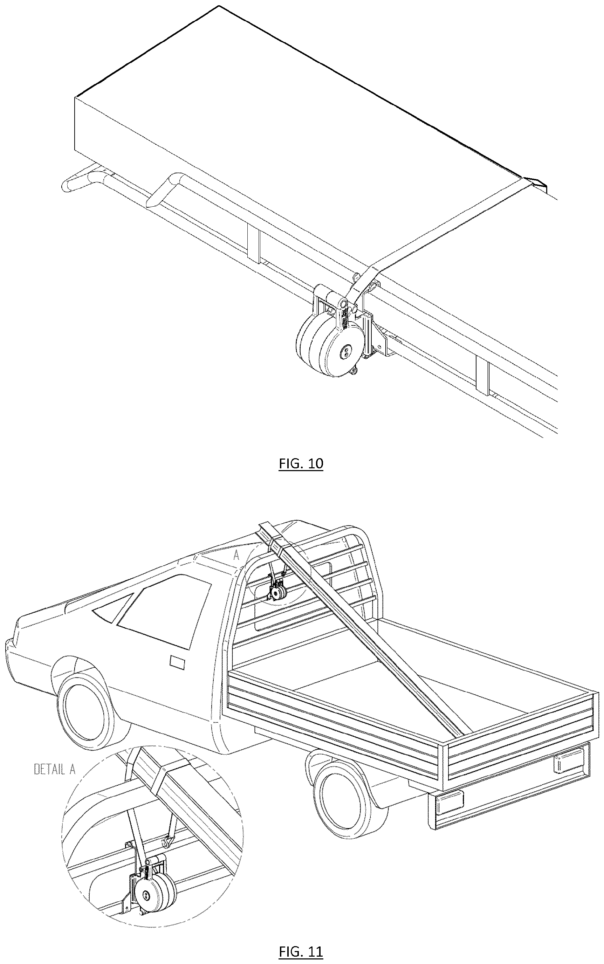

Le mini-treuil 2 est pourvu d'une sangle (non visible sur la figure 6 mais visible sur les figures 10-11) dont une extrémité est fixée au mini-treuil. L'autre extrémité comporte de préférence un crochet qui peut soit se fixer à une barre d'accrochage 20 après avoir entouré l'objet à transporter, soit se fixer à un point d'arrimage quelconque du support. La sangle forme une bande de matière souple qui peut recouvrir un objet en épousant sa morphologie extérieure ou encore être enroulée autour de l'objet. Comme matière souple pour la réalisation de la sangle on peut utiliser des textiles tissés ou tricotés, des textiles non tissés ou encore des bandes en matière plastique souple. Les fibres des textiles peuvent indifféremment être naturelles ou artificielles. Des sangles en tissu de nylon ou en polyester ont donné de bons résultats.

Le mini-treuil 2 comporte également une poignée 22 et une barre 21 servant de guide pour la sangle 3. De préférence, le mini-treuil est réalisé en matière plastique telle que du polyamide chargé de fibres. Parmi les matières thermoplastiques, les PET commercialisés par Dupont de Nemours sous la marque RYNITE^{®} ont également donné de bons résultats.

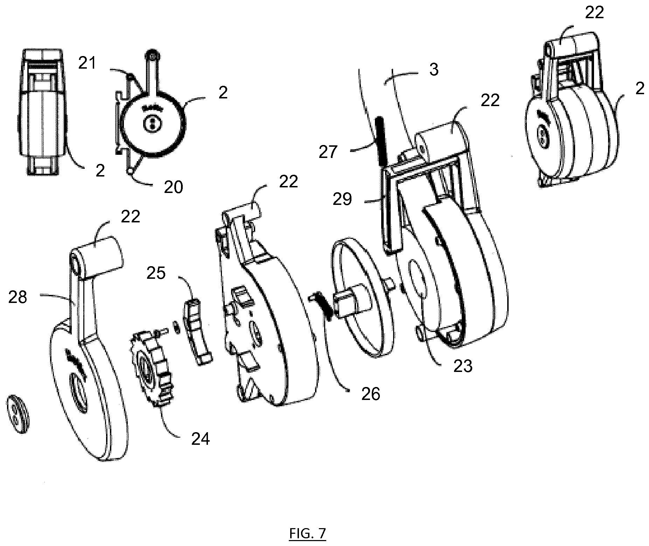

La figure 7 illustre les détails du mini-treuil 2 en schéma éclaté. On y distingue la sangle 3 qui s'enroule autour du tambour 23. Un système de roue dentée 24 à cliquet 25 empêche la détente de la sangle qui peut être tendue par manoeuvre de la poignée 22 formée par les extrémités des deux flasques extérieures et la flasque intérieure du boîtier du mini-treuil 2. Un ressort 26 maintient un effort de moment de torsion sur la roue dentée par rapport au tambour 23 et un autre ressort 27 maintient le cliquet 25 au contact d'une dent de la roue dentée 24. Le ressort 27 coulisse dans une chambre formée par une rainure dans l'intérieur du manche 28 supportant la poignée 22 de la flasque extérieure du boîtier du mini-treuil 2 et une autre rainure 29 située dans une pièce en forme de U renversé pouvant coulisser sur le manche 28. En comprimant ce ressort 27 par soulèvement de la pièce en U, on peut libérer le cliquet 25 de la roue dentée 24 et ainsi permettre la rotation du tambour 23 en sens inverse et détendre la sangle 3. La barre 21 servant de guide pour la sangle 3 est solidaire du boîtier et peut pivoter librement. De préférence, le cliquet 25 et la roue dentée 24 sont réalisés en acier inoxydable.

Dans la figure 10, le dispositif est fixé à un montant de la galerie de toit comprenant deux barres de section circulaire. Une extrémité de la sangle 3 est enroulée sur le mini-treuil 2 alors que l'autre extrémité est fixée au moyen d'un crochet au montant de la galerie se trouvant de l'autre côté de l'objet à transporter. Dans ce mode d'exécution, l'objet est recouvert par la sangle 3.

La figure 11 illustre l'arrimage du dispositif au treillis de protection de la cabine d'un pick-up. Une extrémité de la sangle 3 est enroulée sur le mini-treuil 2 alors que l'autre extrémité est fixée au moyen d'un crochet à un montant du treillis. Dans ce mode d'exécution, l'objet est entouré par la sangle 3.

De préférence, la largeur ou section de la barre de toit n'excède pas 35 mm afin de permettre la prise optimale de la mâchoire.

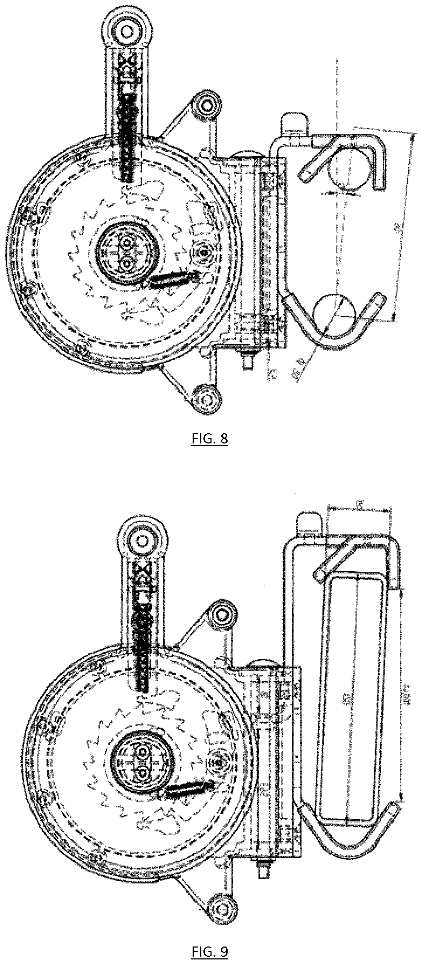

Les figures 1 à 11 sont données dans le but d'illustrer l'invention par un exemple pratique de réalisation, sans vouloir en limiter d'aucune manière sa portée.

### Avantages

Par rapport aux systèmes connus, l'invention présente les avantages suivants :
- le système de fixation est « prêt à l'emploi » sans utilisation d'un outillage spécifique tel que des vis ou boulons ;
- le support auquel est fixé le dispositif d'arrimage ne subit aucune dégradation, même minime ;
- le dispositif peut être déplacé aisément sans occasionner de dégradation du support auquel il est fixé ;
- la fixation du dispositif au support est rapide et réalisée en moins d'une minute ;
- en particulier, elle s'adapte à toutes les dimensions des montants de galeries de toit pour véhicules automobiles, des montants des porte-bagages ou sur les treillis de protection des cabines de pick-up ou des remorques (dans la mesure où le dispositif peut se fixer sur des points d'appuis espacés de minimum 50 mm);
- elle convient pour le transport d'objets de forme et de longueur diverses ;
- les dispositifs de fixation peuvent être très facilement ajustés en nombre et en position en fonction de la morphologie des objets à transporter ;
- contrairement à toutes les sangles habituelles, le dispositif de l'invention présente l'avantage de ne pas devoir être rangé après chaque utilisation, mais bien de pouvoir rester en position « prête à l'arrimage », même lorsqu'il n'est pas utilisé ;
- la sangle est enroulée à l'intérieur d'un boitier qui la protège relativement bien des agressions climatiques.

### Liste des symboles de référence

- 1.: Dispositif de fixation
- 2.: Mini-treuil, aussi appelé enrouleur de sangle
- 3.: Sangle
- 4.: Mâchoire réglable
- 5.: Premier élément de la mâchoire
- 6.: Second élément de la mâchoire
- 7.: Trou taraudé
- 8.: Elément fileté type boulon
- 9.: Palier haut
- 10.: Palier bas
- 11.: Aile supérieure
- 12.: Aile inférieure
- 13.: Vis
- 14.: Ecrou
- 15.: Molette
- 16.: Ailette
- 17.: Sabot de support
- 18.: Joint déformable
- 19.: Attache
- 20.: Barre d'accrochage
- 21.: Barre servant de guide pour la sangle
- 22.: Poignée
- 23.: Tambour
- 24.: Roue dentée aussi appelée roue à rochet
- 25.: Cliquet
- 26.: Premier ressort pour le cliquet
- 27.: Second ressort pour la poignée
- 28.: Manche
- 29.: Rainure dans le mécanisme intérieur du mini treuil
- 30.: Rainures accueillant les paliers
- 31.: Rainure dans le palier haut

## Revendications

1. Dispositif amovible d'arrimage (1) d'une charge sur un véhicule, ledit dispositif comprenant :
- un enrouleur de sangle (2) dont la sangle (3) est destinée à maintenir la charge,
- une mâchoire réglable (4) solidaire de l'enrouleur (2) et destinée à se fixer à un support sur le véhicule, ladite mâchoire (4) comprenant un premier élément (5) et un second élément (6) coopérant l'un par rapport à l'autre de manière à pouvoir faire varier, en utilisation, l'ouverture (L) de la mâchoire en fonction d'une dimension du support,
- un boulon (8) accouplé au premier élément (5), la mise en rotation du boulon (8) entrainant, en utilisation, le déplacement du premier élément (5),
**caractérisé en ce que** le dispositif comporte un palier haut (9) et un palier bas (10) délimitant la course du premier élément (5), lesdits paliers (9,10) étant munis d'un trou non taraudé dans lequel le boulon (8) peut coulisser.

2. Dispositif selon la revendication 1, dans lequel la fixation du dispositif d'arrimage (1) au support est, en utilisation, assurée par le seul réglage de l'ouverture de la mâchoire (4).

3. Dispositif selon l'une quelconque des revendications précédentes, dans lequel le premier élément (5) se présente sous la forme d'un profilé en S comprenant une partie centrale verticale terminée par deux ailes d'orientation opposée (11, 12).

4. Dispositif selon la revendication 3, dans lequel une des ailes (11, 12) comporte un trou taraudé (7) apte à accueillir le boulon (8).

5. Dispositif selon l'une quelconque des revendications précédentes, dans lequel l'enrouleur de sangle (2) comporte une première et une seconde rainures (30) accueillant respectivement le palier haut (9) et le palier bas (10).

6. Dispositif selon l'une quelconque des revendications précédentes, destiné à se fixer au support qui est un montant d'une galerie de toit de camionnette, un montant d'un porte-bagages de voitures ou des treillis de protection utilisés sur les véhicules utilitaires et les remorques.

7. Dispositif selon l'une quelconque des revendications précédentes, dans lequel une extrémité de la sangle (3) est solidaire de l'enrouleur (2) et l'autre extrémité est munie d'un crochet pouvant s'arrimer au support ou à l'enrouleur de sangle (2).

8. Dispositif selon l'une quelconque des revendications précédentes, dans lequel le palier haut (9) comporte une troisième rainure (31) dans laquelle le premier élément (5) peut coulisser.

9. Dispositif selon l'une quelconque des revendications précédentes, dans lequel l'ouverture (L) a une valeur minimale de 50 mm, de préférence 90 mm.

10. Dispositif selon l'une quelconque des revendications précédentes, dans lequel ledit dispositif (1) est adaptable à un support de section ronde, ovale, carrée ou rectangulaire.

11. Dispositif selon l'une quelconque des revendications précédentes, dans lequel le premier élément (5) comporte un point d'appui destiné à entrer en contact avec le support et dans lequel le second élément (6) comporte deux points d'appui destinés à entrer en contact avec le support.

12. Dispositif selon l'une quelconque des revendications précédentes, dans lequel le premier élément (5) et le second élément (6) de la mâchoire comportent un joint déformable (18).

13. Dispositif selon l'une quelconque des revendications précédentes, comportant une molette (15) solidaire du boulon (8), la mise en rotation de la molette (15) permettant de déplacer le premier élément (5).

14. Dispositif selon l'une quelconque des revendications précédentes, dans lequel le support est vertical et l'ouverture de la mâchoire est réglable en utilisation en fonction de la hauteur dudit support.

## Patentansprüche

1. Lösbare Verzurrvorrichtung (1) einer Last auf einem Fahrzeug, wobei die Vorrichtung umfasst:
- einen Gurtaufroller (2), dessen Gurt (3) dazu bestimmt ist, die Last zu halten,
- eine einstellbare Klaue (4), die mit dem Aufroller (2) fest verbunden ist und dazu bestimmt ist, sich an einem Halter auf dem Fahrzeug zu fixieren, wobei die Klaue (4) ein erstes Element (5) und ein zweites Element (6) umfasst, die im Verhältnis zueinander derart zusammenwirken, dass sie im Gebrauch die Öffnung (L) der Klaue in Abhängigkeit von einer Abmessung des Halters verändern,
- einen mit dem ersten Element (5) gekoppelten Bolzen (8), wobei das Inrotationversetzen des Bolzens (8) im Gebrauch die Verlagerung des ersten Elements (5) bewirkt,
**dadurch gekennzeichnet, dass** die Vorrichtung einen hohen Absatz (9) und einen niedrigen Absatz (10) aufweist, die den Lauf des ersten Elements (5) begrenzen, wobei die Absätze (9, 10) mit einem nicht gewindeten Loch ausgestattet sind, in welchem der Bolzen (8) gleiten kann.

2. Vorrichtung nach Anspruch 1, wobei die Befestigung der Verzurrvorrichtung (1) am Halter im Gebrauch allein durch Einstellen der Öffnung der Klaue (4) erfolgt.

3. Vorrichtung nach einem der vorangehenden Ansprüche, wobei das erste Element (5) die Form eines S-Profils hat, das einen vertikalen zentralen Abschnitt hat, der von zwei gegenüberliegend ausgerichteten Flügeln (11, 12) beendet wird.

4. Vorrichtung nach Anspruch 3, wobei einer der Flügel (11, 12) ein gewindetes Loch (7) aufweist, das imstande ist, den Bolzen (8) aufzunehmen.

5. Vorrichtung nach einem der vorangehenden Ansprüche, wobei der Gurtaufroller (2) eine erste und eine zweite Nut (30) aufweist, die jeweils den hohen Absatz (9) und den niedrigen Absatz (10) aufnehmen.

6. Vorrichtung nach einem der vorangehenden Ansprüche, die bestimmt ist, sich auf dem Halter zu fixieren, der eine Strebe einer Dachreling eines Kleinlasters, eine Strebe eines Fahrzeuggepäckträgers oder der Schutzgitter, die von Nutzfahrzeugen und Anhängern verwendet werden, ist.

7. Vorrichtung nach einem der vorangehenden Ansprüche, wobei ein Ende des Gurts (3) mit dem Aufroller (2) fest verbunden ist und das andere Ende mit einem Haken ausgestattet ist, der am Halter oder am Gurtaufroller (2) befestigbar ist.

8. Vorrichtung nach einem der vorangehenden Ansprüche, wobei der hohe Absatz (9) eine dritte Nut (31) aufweist, in welcher das erste Element (5) gleiten kann.

9. Vorrichtung nach einem der vorangehenden Ansprüche, wobei die Öffnung (L) einen minimalen Wert von 50 mm, vorzugsweise von 90 mm, hat.

10. Vorrichtung nach einem der vorangehenden Ansprüche, wobei die Vorrichtung (1) an einen Halter mit einem runden, ovalen, quadratischen oder rechteckigen Querschnitt anpassbar ist.

11. Vorrichtung nach einem der vorangehenden Ansprüche, wobei das erste Element (5) einen Abstützpunkt aufweist, der bestimmt ist, mit dem Halter in Kontakt zu treten, und wobei das zweite Element (6) zwei Abstützpunkte aufweist, die bestimmt sind, mit dem Halter in Kontakt zu treten.

12. Vorrichtung nach einem der vorangehenden Ansprüche, wobei das erste Element (5) und das zweite Element (6) der Klaue einen verformbaren Stoß (18) aufweisen.

13. Vorrichtung nach einem der vorangehenden Ansprüche, aufweisend ein mit dem Bolzen (8) fest verbundenes Rändel (15), wobei das Inrotationversetzen des Rändels (15) erlaubt, das erste Element (5) zu verlagern.

14. Vorrichtung nach einem der vorangehenden Ansprüche, wobei der Halter vertikal ist und die Öffnung der Klaue im Gebrauch in Abhängigkeit von der Höhe des Halters einstellbar ist.

## Claims

1. A removable device (1) for securing a load on a vehicle, said device comprising:
- a strap winder (2), the strap (3) of which is intended to maintain the load,
- an adjustable jaw (4) secured to the winder (2) and intended to be fastened on a support on the vehicle, said jaw (4) comprising a first element (5) and a second element (6) cooperating relative to one another so that it is possible to vary, during use, the opening (L) of the jaw depending on a dimension of the support,
- a bolt (8) coupled to the first element (5), the rotation of the bolt (8) driving the motion of the first element (5) during use,
**characterised in that** the device comprises an upper bearing (9) and a lower bearing (10) defining the path of the first element (5), said bearings (9, 10) being provided with an untapped hole in which the bolt (8) can slide.

2. The device according to Claim 1, **characterised in that** the fastening of the securing device (1) to the support is provided during use by simply adjusting the opening of the jaw (4).

3. The device according to any one of the preceding claims, **characterised in that** the first element (5) assumes the form of an S-shaped profile comprising a vertical central part ending with two wings (11, 12) having opposite orientations.

4. The device according to Claim 3, **characterised in that** one of the wings (11, 12) comprises a tapped hole (7) that can accommodate the bolt (8).

5. The device according to any one of the preceding claims, **characterised in that** the strap winder (2) comprises first and second slots (30) accommodating the upper bearing (9) and the lower bearing (10), respectively.

6. The device according to any one of the preceding claims, intended to be fastened to the support, which is an upright of the roof basket of a pickup truck, an upright of the luggage rack of a car or a protective grate used on utility vehicles and trucks.

7. The device according to any one of the preceding claims, **characterised in that** one end of the strap (3) is secured to the winder (2) and the other end is provided with a hook that can be secured to the support or to the strap winder (2).

8. The device according to any one of the preceding claims, **characterised in that** the upper bearing (9) comprises a third slot (31) in which the first element (5) can slide.

9. The device according to any one of the preceding claims, **characterised in that** the opening (L) has a minimum value of 50 mm, preferably 90 mm.

10. The device according to any one of the preceding claims, **characterised in that** said device (1) can be adapted to a support with a round, oval, square or rectangular section.

11. The device according to any one of the preceding claims, **characterised in that** the first element (5) comprises a bearing point intended to come into contact with the support and **in that** the second element (6) comprises two bearing points intended to come into contact with the support.

12. The device according to any one of the preceding claims, **characterised in that** the first element (5) and the second element (6) of the jaw comprise a deformable seal (18).

13. The device according to any one of the preceding claims, comprising a knurl (15) secured to the bolt (8), the rotation of the knurl (15) allowing to move the first element (5).

14. The device according to any one of the preceding claims, **characterised in that** the support is vertical and the opening of the jaw can be adjusted during use depending on the height of said support.
